# EUROPEAN PATENT SPECIFICATION

(11) **EP 1 270 207 B1**
(45) Date of publication and mention of the grant of the patent: **31.03.2010**
(21) Application number: 01115403.6
(22) Date of filing: 26.06.2001
(51) Int. Cl.: B32B 27/28, B26F 3/00, B26D 7/18

(54) **Porous sheet substrate**
Poröse Substratfolie
Substrat poreux en forme de feuille

(43) Date of publication of application: 02.01.2003
(73) Proprietor: NITTO DENKO CORPORATION, Osaka (JP)
(72) Inventor: Yanagi, Toshiki, Ibaraki-shi, Osaka (JP)
(74) Representative: Grünecker, Kinkeldey, Stockmair & Schwanhäusser Anwaltssozietät

(56) References cited:
- US-A- 5 776 343
- US-A- 5 858 505
- PATENT ABSTRACTS OF JAPAN vol. 2000, no. 06, 22 September 2000 (2000-09-22) & JP 2000 071398 A (NIPPON VALQUA IND LTD), 7 March 2000 (2000-03-07)

## Description

The present invention relates to a porous sheet substrate according to the preamble portion of claim 1.

### BACKGROUND OF THE INVENTION

US-A-5,858,505 discloses a microscopically perforated porous expanded PTFE sheet material. The manufacturing process for such material involves the steps of extruding a preformed billet of a mixture of PTFE and a liquid lubricant to form an extrudate, perforating the extrudate, removing the liquid lubricant from the extrudate and expanding the PTFE by stretching. The PTFE extrudate is thereby always perforated prior to expansion.

US 5,776,343 relates to an extrudate film of crystalline, thermoplastic, extrudable fluoroplastic material with spaced-apart strand segments that define a regular geometric pattern of apertures therebetween.

JP-A-20071398 discloses a strength-enhanced porous PTFE membrane, the reinforcing material having a peripheral edge part shape similar to the PTFE membrane and having 1/4 circular notch parts formed therein.

WO-A-97/03614 discloses a surgical staple line reinforcement device comprising a tubular sleeve, wherein that sleeve consists of expanded polytetrafluoroethylene. That sleeve includes mean to allow ready separation of part of the sleeve to another part of it, in the form of tear lines.

Porous sheet pieces have conventionally been used in head lamps for automobiles, sports wears, portable phones and the like in order to impart function for releasing its internally generated gas or for adjusting inner pressure to them, impart function of gas permeability and moisture permeability between the inside and the outside to them, or impart function of waterproofness and dustproofness from the outside to them.

Such a porous sheet piece comprises a porous material made of polytetrafluoroethylene (hereinafter referred to as "PTFE") or a composite sheet comprising the porous material and a gas-permeable reinforcing material such as a woven fabric or non-woven fabric, laminated on at least one side thereof.

The porous sheet piece is cut off from a porous sheet substrate as its matrix into a given shape or size in conformity with a shape or a size of a vent hole provided on a main body such as head lamps of automobiles, and mounted on the vent hole.

One of the mounting methods is a method of using heat fusion. This method is as follows . A porous sheet piece is punched from the porous sheet substrate using a punching machine. The porous sheet piece punched is conveyed to a mounting position (a vent hole of a main body. The porous sheet piece is heat fused to the vent hole of the main body by pressing a heat fusion mold thereto.

However, in the above method, porous sheet pieces punched are in a random state, and the front and back thereof are not uniformly arranged. Therefore, it is necessary to convey those pieces by uniformly arranging the front and the back thereof and placing those pieces thus uniformly arranged on a pressure sensitive adhesive sheet. This decreases efficiency of mounting work of porous sheet pieces. Further, when the pressure-sensitive adhesive sheet has a strong adhesive force, problem rises that the porous sheet piece is damaged in peeling the porous sheet piece from the pressure-sensitive adhesive sheet or it is impossible to securely peel the porous sheet piece therefrom. Reversely, when the pressure-sensitive adhesive sheet has a weak adhesive force, problem also rises that the porous sheet piece causes positional deviation or drops out, in the course of conveyance, a separator is necessary, or it is impossible to supply a long-size piece. Further, a suction apparatus or the like is used to convey the porous sheet piece from the pressure-sensitive adhesive sheet to the mounting position. As a result, mounting work efficiency of the porous sheet piece deteriorates.

A method for improving a mounting work efficiency of porous sheet pieces includes a method comprising the steps of conveying a porous sheet substrate to a mounting position, cutting porous sheet pieces with a heat cutter or a punching blade, and immediately after cutting, heat fusing the cut pieces. However, this method involves cutting off the porous sheet pieces on a main body, and therefore there is the problem of being liable to give damage to the main body.

### SUMMARY OF THE INVENTION

The present invention has been made in the above circumstances.

Accordingly, an object of the present invention is to provide a porous sheet substrate that can improve a mounting work efficiency of porous sheet pieces without damaging a main body to which the porous sheet pieces are mounted.

To achieve the above object, the porous sheet substrate according to the present invention is a porous sheet substrate suitable for cutting off porous sheet pieces, which comprises a polytetrafluoroethylene-made porous material or a composite sheet comprising the polytetrafluoroethylene-made porous material and a gas-permeable reinforcing member laminated on at least one side of the porous material, characterized in that cut portions (3) and non-cut portions (2) define a circular outline of the porous sheet pieces to be cut out and the porous sheet pieces are foreseen to be cut off against the non-cut portions by pushing the porous sheet pieces to be cut.

Thus, the porous sheet substrate of the present invention has a structure such that the cut portions and non-cut portions are formed along outlines of porous sheet pieces to be cut, and the porous sheet pieces are cut off against the non-cut portions by pushing the porous sheet pieces to be cut. As a result, in mounting the porous sheet pieces to the mounting position, the porous sheet pieces can be cut off the porous sheet substrate against the non-cut portions by positioning the portions to be cut comprising the cut portion to the mounting position and pushing the portions to be cut in a heat fusion mold, and the portions cut can then be mounted to the mounting position by heat fusion. Therefore, using the porous sheet substrate of the present invention can improve mounting work efficiency of the porous sheet pieces. Further, because a heat cutter or a punching blade is not used, the main body to which the porous sheet pieces are mounted, is not damaged.

The term "porous material" used herein means a material having gas permeability, moisture permeability, waterproofness, dustproofness and the like.

### BRIEF DESCRIPTION OF THE DRAWINGS

Fig. 1 is an explanatory view showing one embodiment of the porous sheet substrate of the present invention.

Fig. 2 is an explanatory view showing a mounting method of the porous sheet pieces using the porous sheet substrate of the present invention.

Fig. 3 is an explanatory view showing another mounting method of the porous sheet pieces using the porous sheet substrate of the present invention.

Fig. 4 an explanatory view showing further mounting method of the porous sheet pieces using the porous sheet substrate of the present invention.

Fig. 5 is an explanatory view showing another embodiment of the porous sheet substrate of the present invention.

Fig. 6 is an explanatory view showing further embodiment of the porous sheet substrate of the present invention.

In the drawings:
A: Porous sheet substrate
1: Porous sheet pieces
2: Non-cut portion
3: Cut portion

### DETAILED DESCRIPTION OF THE INVENTION

The practical embodiment of the present invention is described in more detail based on the drawings.

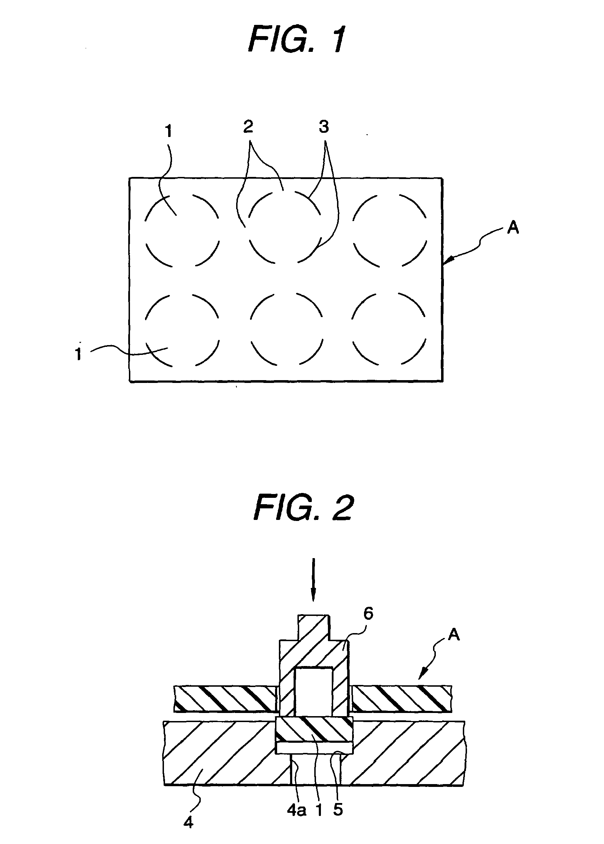

Fig. 1 shows one embodiment of the porous sheet substrate of the present invention. In this embodiment, the porous sheet substrate A is for cutting off circular porous sheet pieces 1 (6 pieces in Fig. 1). Four dotted non-cut portions 2 each having a length of 1 mm or less, preferably 0.2 to 0.5 mm, are arranged with the same interval along a circular outline of the porous sheet piece 1 to be cut, and cut portion 3 penetrating the porous sheet substrate A is formed between the adjacent non-cut portions 2.

In mounting the porous sheet piece 1 to a vent hole 4a (see Figs. 2 to 4) provided on a main body 4 (see Fig. 2 to 4) such as a head lamp of automobiles, using the porous sheet substrate A, the mounting work is conducted as follows.

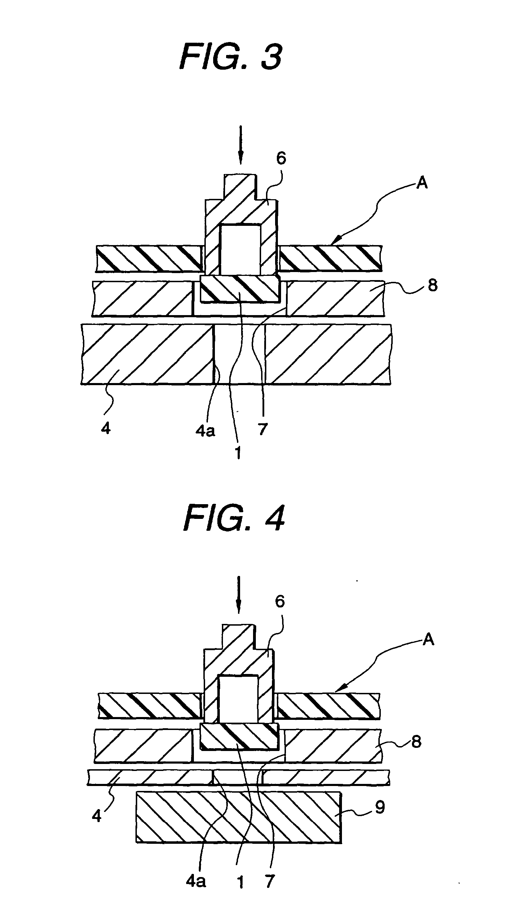

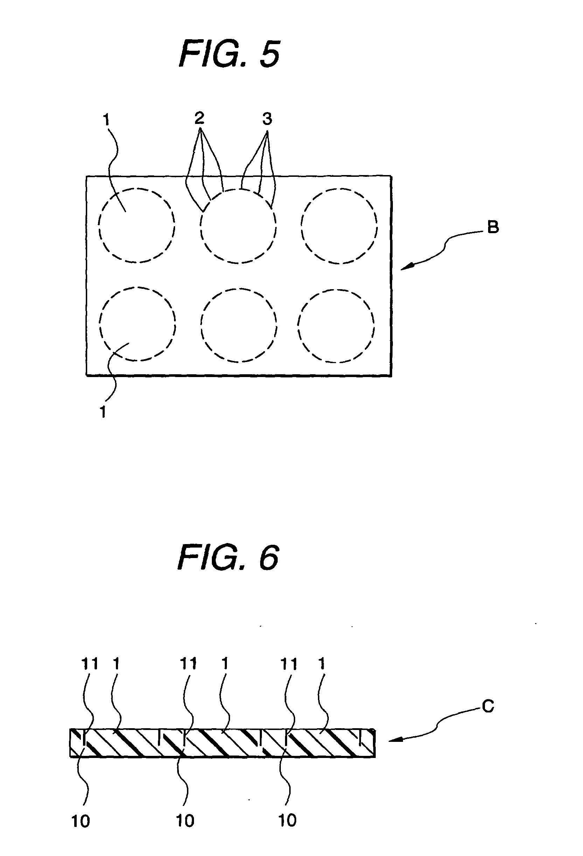

As shown in Fig. 2, where the vent hole 4a is formed in a cavity portion 5 in which its upper portion (outer side of the main body 4) has a diameter smaller than that of its lower portion (inner side of the main body), the porous sheet piece 1 to be cut is positioned on the upper portion of the vent hole 4a, and pushed with a heat fusion mold 6, thereby the porous sheet piece 1 can be cut off the porous sheet substrate A against the non-cut portion 2 (see Fig. 1), and can then be mounted to the cavity portion 5 of the vent hole 4a by heat fusion. Further, as shown in Fig. 3, where the vent hole 4a is not formed on the cavity portion 5 (see Fig. 5), a spacer having formed thereon an opening 7 having the same diameter as or a diameter slightly larger than that of the porous sheet piece 1 is used, and the opening 7 of the spacer 8 is positioned on the upper (outside of main body 4) opening of the vent hole 4a, and under such a positioning state, the porous sheet piece can be heat fused in the same manner as shown in Fig. 2. Thus, using the spacer 8 can minimize formation of burr. Further, as shown in Fig. 4, where the main body 4 to which the porous sheet piece 1 is mounted is a soft material such as sportswear, a hard plate 9 is applied to a side opposite the side to which the porous sheet piece 1 is mounted, and can then be heat fused using the spacer 8 in the same method as shown in Fig. 3.

Thus, according to the above embodiments, the porous sheet piece 1 can be mounted to the vent hole 4a by heat fusion after cutting the same off the porous sheet substrate A, so that the mounting work efficiency of the porous sheet piece 1 can be improved. Further, since a heat cutter or a punching blade is not used, the main body to which the porous sheet piece 1 is mounted is not damaged.

As a result, the porous sheet substrate A can be used as a long-size roll, and it is possible to mount the porous sheet piece 1 to the vent hole 4a of the main body 4 securely and with good efficiency. This enables the porous sheet piece A to be difficult to receive damage during conveyance.

Fig. 5 shows another embodiment of the porous sheet substrate of the present invention. In this embodiment, the circular outlines of the porous sheet piece 1 to be cut are perforated shape in which dotted non-cut portions 2 and dotted cut-portions 3 are alternately formed. The portions other than this are the same as in the above one example, and the same symbols are applied to the same portions.

Even by this embodiment, the porous sheet piece 1 can be mounted to the vent hole 4a of the main body by heat fusion in the same manner as in the above one example, and the same action and effect are exhibited.

Fig. 6 shows further example of the porous sheet substrate of the present invention. In this embodiment, the circular outlines of the porous sheet piece 1 to be cut are half-cut. That is, the cut portion 11 is formed in the state of not penetrating the porous sheet substrate C (in the state that a part in the thickness direction of the outline is not cut to form a non-cut portion 10). Portions other than this are the same as in the above one embodiment, and the same symbols are applied to the same portions.

Even by this embodiment, the porous sheet piece 1 can be mounted to the vent hole 4a of the main body by heat fusion in the same manner as in the above one example, and the same action and effect are exhibited.

The porous sheet substrates A, B and C (porous sheet piece 1) in the above each embodiments each comprise a PTFE-made porous material or a composite sheet comprising the porous material and a gas permeable reinforcing member such as fabric, non-fabric or net, laminated on at least one side of the porous material.

In the porous sheet substrate A shown in Fig. 1, the dotted non-cut portion 2 is arranged at 4 positions, but the number of the dotted no-cut portion is not particularly limited. However, the dotted non-cut portion 2 is preferably arranged at 3 positions or more in that the porous sheet piece 1 does not rotate.

As described above, according to the porous sheet substrate of the present invention, the cut portions and non-cut portions are formed along outline of the porous sheet piece to be cut, and the porous sheet piece is cut off against the non-cut portion by pushing the porous sheet piece to be cut. As a result, in mounting the porous sheet pieces to the mounting position, the porous sheet pieces can be cut off the porous sheet substrate against the non-cut portions by positioning the portions to be cut comprising the cut portion to the mounting position and pushing the portions to be cut in a heat fusion mold, and the portions cut can then be mounted to the mounting position by heat fusion. Therefore, using the porous sheet substrate of the present invention can improve mounting work efficiency of the porous sheet pieces. Further, because a heat cutter or a punching blade is not used, the main body to which the porous sheet pieces are mounted, is not damaged.

## Claims

1. A porous sheet substrate (A,B,C), suitable for cutting off porous sheet pieces (1), which comprises a polytetrafluoroethylene-made porous material or a composite sheet comprising the polytetrafluoroethylene-made porous material and a gas-permeable reinforcing member laminated on at least one side of the porous material, **characterized in that** cut portions (3) and non-cut portions (2) define a circular outline of the porous sheet pieces to be cut out and the porous sheet pieces are foreseen to be cut off against the non-cut portions by pushing the porous sheet pieces to be cut.

## Patentansprüche

1. Poröses Foliensubstrat (A, B, C), welches zum Abtrennen bzw. Abschneiden poröser Folienstücke (1) geeignet ist, umfassend ein aus Polytetrafluorethylen hergestelltes poröses Material oder eine Verbundfolie, welche das aus Polytetrafluoroethylen hergestellte poröse Material und ein auf wenigstens einer Seite des porösen Materials laminiertes, gasdurchlässiges Verstärkungselement umfasst,
**dadurch gekennzeichnet, dass** getrennte bzw. geschnittene Bereiche (3) und nichtgetrennte Bereiche (2) eine kreisförmige Außenlinie der porösen abzutrennnenden Folienstücke definieren und wobei beabsichtigt ist, die porösen Folienstücke von den nicht-getrennten Bereichen abzutrennen, indem die porösen abzutrennenden Folienstücke herausgedrückt werden.

## Revendications

1. Substrat poreux de type feuille (A, B, C), convenant à la découpe de morceaux de feuilles poreux (1), lequel comprend un matériau poreux fait de polytétrafluoroéthylène ou une feuille composite comprenant le matériau poreux fait de polytétrafluoroéthylène et un élément de renfort perméable aux gaz contrecollé sur au moins une face du matériau poreux, **caractérisé en ce que** les parties coupées (3) et les parties non coupées (2) définissent le contour circulaire des morceaux de feuilles poreux à découper et qu'il est prévu de découper les morceaux de feuilles poreux contre les parties non coupées par pression sur les morceaux de feuilles poreux à découper.
